(19)

**Europäisches Patentamt**

**European Patent Office**

**Office européen des brevets**

(11) **EP 4 531 172 A1**

(12) **EUROPEAN PATENT APPLICATION**

(43) Date of publication:
02.04.2025 Bulletin 2025/14

(21) Application number: 23306640.6

(22) Date of filing: 29.09.2023

(51) International Patent Classification (IPC):
*H01M 10/647* (2014.01)    *H01M 10/6557* (2014.01)
*H01M 50/233* (2021.01)    *H01M 50/291* (2021.01)

(52) Cooperative Patent Classification (CPC):
**H01M 50/291; H01M 10/647; H01M 10/6557;**
**H01M 50/209;** H01M 10/613; H01M 50/233;
H01M 50/293

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Automotive Cells Company SE**
**33520 Bruges (FR)**

(72) Inventors:
• **BOUCHARD, Vincent**
**33290 Blanquefort (FR)**
• **FRESNEAU, Aymeric**
**33400 Talence (FR)**
• **NACEREDDINE, Rabia**
**33300 Bordeaux (FR)**

(74) Representative: **Lavoix**
**2, place d'Estienne d'Orves**
**75441 Paris Cedex 09 (FR)**

(54) **BATTERY WITH PERFECTED SPACERS BETWEEN CELLS**

(57) The battery (10) comprises a casing (12) housing prismatic cells (14) stacked in a longitudinal direction (X), and comprising spacers (16) between the cells (14). Each spacer (16) comprises at least one spacer element (18; 22) comprising a curved wall, the spacer element (18; 22) being deformable when compressed in the longitudinal direction (X) while extending in a transverse direction (Y) perpendicular to the longitudinal direction (X). The extension of each spacer element (18; 22) in the transverse direction (Y) is free on a first length, then limited by a contact. The battery (10) comprises cooling fluid, the curved wall having two faces, each face being in contact with cooling fluid.

FIG.1

EP 4 531 172 A1

**Description**

The present invention relates to a battery with perfected spacers between cells.

A battery is already known from prior art, comprising a casing housing prismatic cells stacked in a longitudinal direction, and comprising spacers between the cells. In order to cool the cells, a cooling fluid circulates through ducts in the spacers, and/or between the spacers and the cells.

During the life of the cells, the cells may swell while aging, which compress the spacers and thus tends to close the ducts, reducing the cooling power of the spacers.

The invention is intended to remedy to this drawback, by furnishing a battery guaranteeing a fluid passage between the cells even when the cells swell. A guaranteed fluid passage allows to safely design a battery with a proper cooling and no risk for thermal propagation between the cells.

To this end, the invention relates to a battery comprising a casing housing prismatic cells stacked in a longitudinal direction, and comprising spacers between the cells, characterized in that:

-    each spacer comprises at least one spacer element comprising a curved wall, the spacer element being deformable when compressed in the longitudinal direction while extending in a transverse direction perpendicular to the longitudinal direction,
-    the extension of each spacer element in the transverse direction is free on a first length, then limited by a contact,
-    the battery comprises cooling fluid, the curved wall having two faces, each face being in contact with cooling fluid.

Because the transversal extension of the spacer is limited, it is easy to compress on the first length, then its stiffness increases when encountering the contact, ensuring a minimum duct.

A battery according to the invention may comprise any of the following features, alone or in any possible combination.

-    The spacer comprises a plurality of spacer elements, each spacer element being formed by a cylindrical tube extending in a third direction perpendicular to the longitudinal direction and perpendicular to the transverse direction, the spacer elements being arranged side by side in the transverse direction.
-    The spacer elements are arranged to encounter with each other when compressed.
-    At least one of the spacer elements has a diameter that is different from the diameter of at least another of the spacer elements.
-    At least one of the spacer elements has a wall thickness that is different from the wall thickness of at least another of the spacer elements.
-    The spacer comprises only one spacer element, formed by a corrugated sheet.
-    The spacer element is arranged to encounter with lateral walls of the casing when compressed.
-    The spacer element comprises a plurality of waves, at least one of the waves having a height and/or a wall thickness that is different from the height and/or the wall thickness of at least another of the waves.

Several aspects and advantages of the invention will be enlightened in the following disclosure, given only as a non limitative example and made in reference to attached drawings in which:

-    Figure 1 is a perspective view of a partially shown battery according to a first embodiment of the invention;
-    Figure 2 is a schematic view from above of a part of the battery of claim 1;
-    Figure 3 is a perspective view of an assembly of spacers equipping the battery of claims 1 and 2;
-    Figure 4 is a schematic view from above of a part of a battery according to a second embodiment of the invention; and
-    Figure 5 is a similar view as Figure 4 of the part of the battery with swelled cells;
-    Figure 6 is a side view of a spacer equipping the battery of figures 4 and 5.

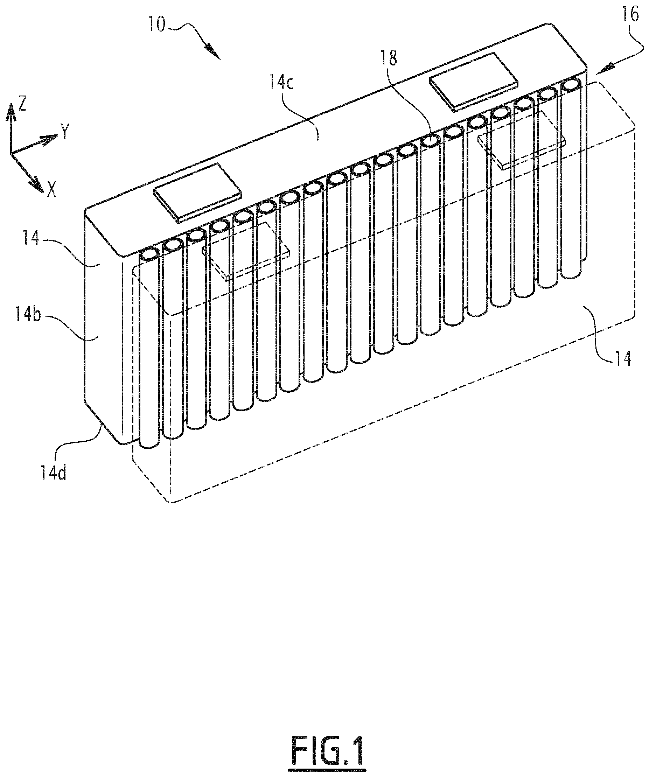

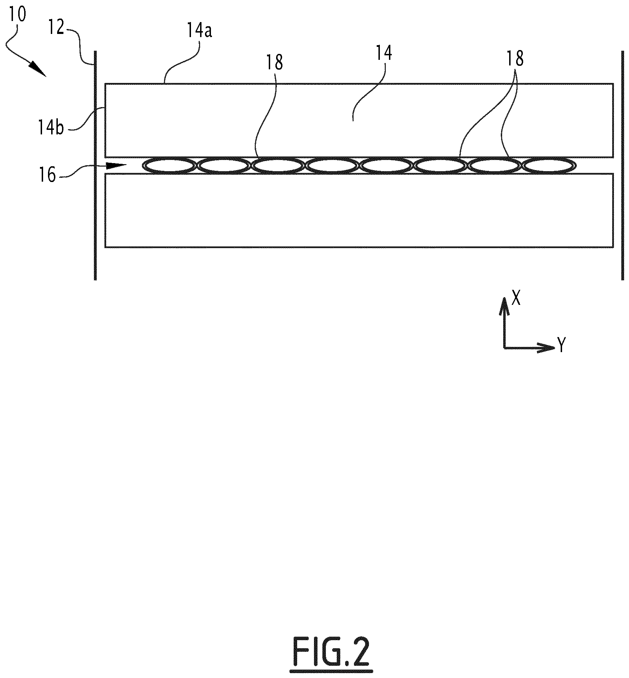

Figure 1 partially shows a battery 10 according to a first example of embodiment. The battery 10 comprises a casing 12 (shown on Figure 2), housing a plurality of cells 14 stacked in a longitudinal direction X. Figure 1 shows a pair of cells 14, but it comprises more of them.

Cells 14 are prismatic cells, having a generally parallelepiped shape. Each cell 14 has two main faces 14a, two lateral faces 14b, an upper face 14c and a lower face 14d. Each lateral face 14b is arranged in front of a respective lateral wall of the casing 12, as shown on figure 2.

We define on Figure 1 a transverse direction Y perpendicular to the longitudinal direction X, and a third direction Z perpendicular to the transverse direction Y and perpendicular to the longitudinal direction X. We also define :

-    a plane YZ that is parallel to the transverse direction Y and to the third direction Z,
-    a plane XZ that is parallel to the longitudinal direction X and to the third direction Z, and
-    a plane XY that is parallel to the longitudinal direction X and to the transverse direction Y.

The main faces 14a have a bigger surface than the other faces. Each main face 14a is parallel to the plane YZ.

Each lateral face 14b is parallel to the plane XZ.

The upper face 14c and the lower face 14d are parallel to the plane XY.

The battery 10 also comprises spacers 16 between the cells 14. More particularly, each pair of cells 14 has a spacer 16 between the cells 14 of this pair. Figures only show pair of cells 14.

Only one spacer 16 will be now disclosed, the other spacers being similar.

The spacer 16 is arranged between the main faces of the corresponding cells 14.

Each spacer 16 comprises at least one spacer element 18 comprising a curved wall, the spacer element 18 being deformable when compressed in the longitudinal direction X while extending in the transverse direction Y. Such a compression is due to swelling of the cells 14 during their life. The curved shape of the wall allows such a deformation.

The extension of each spacer element 18 in the transverse direction Y is free on a first length, then limited by a contact.

The battery 10 comprises cooling fluid, the curved wall having two faces, each face being in contact with cooling fluid. In other words, the invention uses immersion technology to cool the cells 14.

In the first embodiment shown on figures 1 and 2, the spacer 16 comprises a plurality of spacer elements 18, each spacer element 18 being formed by a cylindrical tube extending in the third direction Z. This cylindrical shape forms said curved wall.

The spacer elements 18 are arranged side by side in the transverse direction Y.

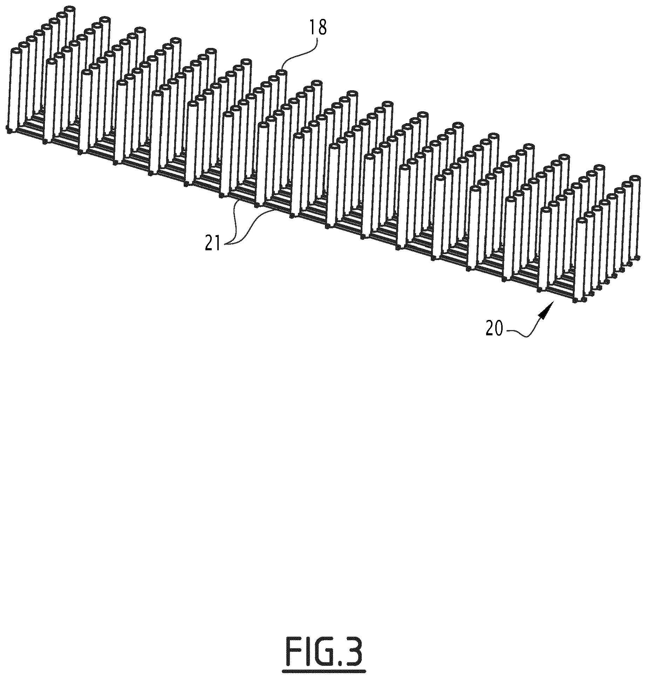

Optionally, the spacer elements 18 are connected at least at one of its ends by a flexible sheet 20, as shown on figure 3. Optionally, the sheets of all spacers 16 are connected together. Preferentially, the flexible sheet 20 comprises openings to allow the fluid to circulate. For example, the flexible sheet 20 is made of a plurality of flexible elements 21 each extending between two adjacent spacer elements 18.

The spacer elements 18 are preferentially made of rubber or plastic, for example by tridimensional printing or by molding. In a variant, the spacer elements 18 are made of any material that is compatible with the temperatures and stresses, and chemically compatible with the fluid. Thus, metallic spacer elements 18 are suitable.

The spacer elements 18 are arranged to encounter with each other when compressed, as shown on figure 2. In particular, the distance between two adjacent spacer elements 18 is less than the radius of each spacer element 18. Preferentially, the distance between two adjacent spacer elements 18 is superior to $\frac{\pi R}{2}$, where R is the radius of the spacer elements 18.

It should be noticed that, when compressed while not encountering each other, the spacer elements 18 are compressed without significant resistive strength.

Then, when encountering each other, the spacer elements 18 cannot extend in the transverse direction Y anymore, so their strength against compression is much more. As a result, the spacer elements 18 cannot be completely compressed, so there is still a cavity with cooling fluid in it, so there is no risk of too low fluid flow rate between the cells 14. This allows avoiding conductive heat transfer between two cells 14 through the spacer. Limited conductive heat transfer is preferred to avoid thermal propagation of a thermal runaway between two adjacent cells.

It should be noticed that the cells 14 tend to bulge in the center when swollen. Thus, preferentially, the strength against compression is not the same on all the transversal length of the spacer 16. To this end, at least one of the spacer elements 18 preferentially has a diameter that is different from the diameter of at least another of the spacer elements 18. In a variant, or complementarily, at least one of the spacer elements 18 has a wall thickness that is different from the wall thickness of at least another of the spacer elements 18.

Preferentially, the spacer stiffness is lower on the sides of the cell 14. Thus, the spacer elements 18 have a higher diameter and/or lower wall thickness on the side than on the center.

In a preferred embodiment, the wall thickness of each spacer element 18 is small regarding to the diameter of the spacer element 18, for example less than 20 % of the diameter. This ensure that neglectable conductive heat transfer will be achieved between two cells, in particular in the case of a safety event (thermal run away of a cell and risk of thermal propagation between cells).

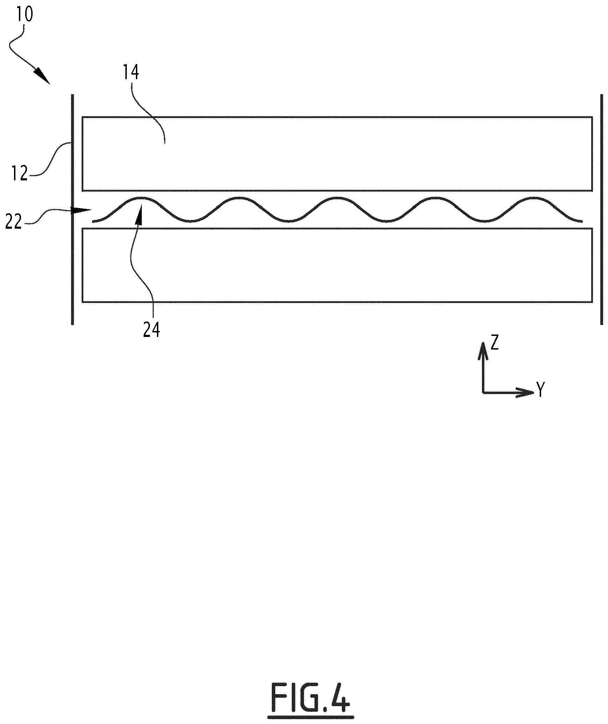

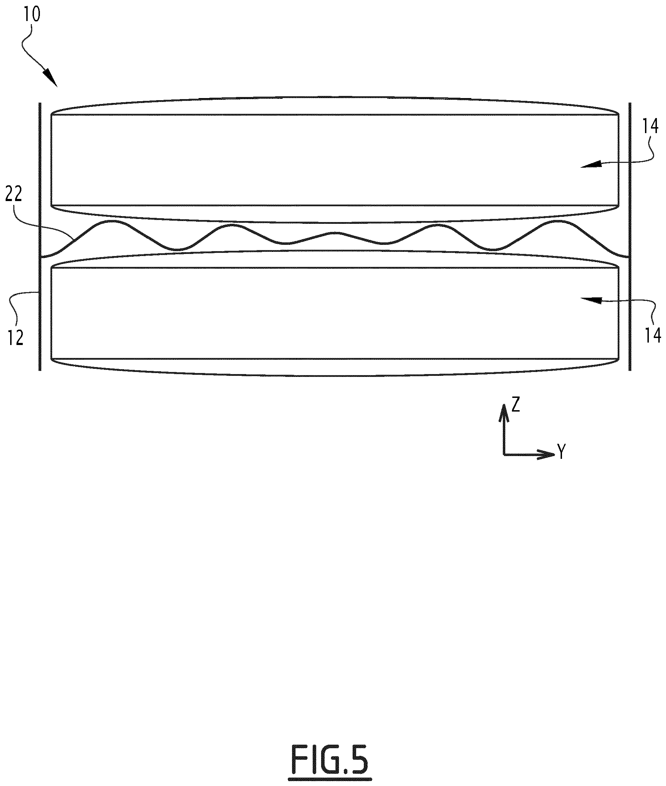

A battery 10 according to a second embodiment is shown on Figures 4 and 5.

According to the second embodiment, the spacer 16 comprises only one spacer element 22, formed by a corrugated sheet. Thus, the spacer element 22 comprises a plurality of waves 24, aligned in the transverse direction Y. Each wave 24 forms said curved wall.

As shown on Figure 5, the spacer element 22 is arranged to encounter with walls of the casing 12 when compressed. In other word, the length of the spacer element 22 in the transverse direction Y, when totally planed, is superior to the distance between the lateral walls of the casing.

Thus, when the spacer element 22 encounters the lateral walls, this spacer element 22 cannot extend in the transverse direction Y anymore, so its strength against compression is much more. As a result, the spacer element 22 cannot be completely compressed, so it still delimits a cavity with cooling fluid in it.

As previously said, the cells 14 tend to bulge in the center when swollen. Thus, preferentially, the stiffness against compression is not the same on all the transversal length of the spacer 16. To this end, at least one of the waves 24 has a height and/or a wall thickness that is different from the height and/or the wall thickness of at least another of the waves 24.

Preferentially, the spacer stiffness is lower on the sides of the cell 14. Thus, the waves 24 have a lower height and/or wall thickness on the side than on the center.

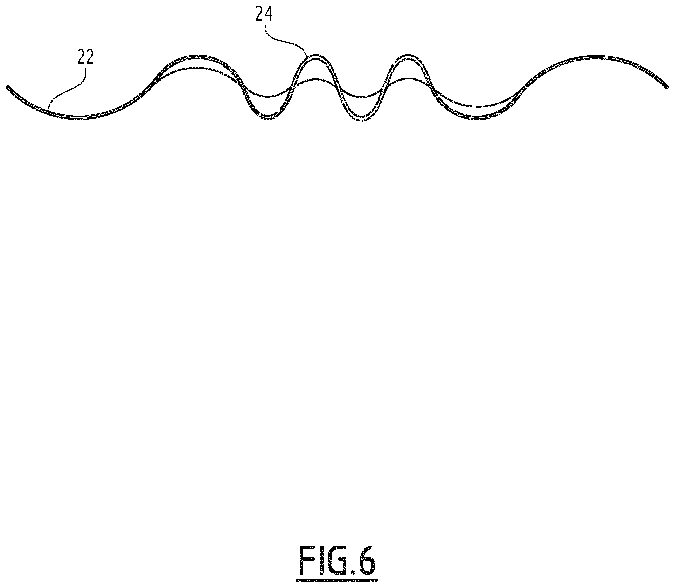

In order to increase stiffness in the center, the waves 24 are, in a variant, bulged in the third direction, as shown on figure 6.

It should be noticed that the invention uses spacers that are simple and cheap to manufacture.

**Reference numbers:**

    10: Battery
    12: Casing
    14: Cell
    14a: Main Faces of the cell
    14b: Lateral faces of the cell
    14c: Upper face of the cell
    14d: Lower face of the cell
    16: Spacer
    18: Spacer element from the first embodiment
    20: Flexible sheet
    22: Spacer element from the second embodiment
    24: Wave
    X: Longitudinal direction
    Y: Transverse direction
    Z: Third direction

**Claims**

1. A battery (10) comprising a casing (12) housing prismatic cells (14) stacked in a longitudinal direction (X), and comprising spacers (16) between the cells (14), **characterized in that**:

    - each spacer (16) comprises at least one spacer element (18; 22) comprising a curved wall, the spacer element (18; 22) being deformable when compressed in the longitudinal direction (X) while extending in a transverse direction (Y) perpendicular to the longitudinal direction (X),
    - the extension of each spacer element (18; 22) in the transverse direction (Y) is free on a first length, then limited by a contact,
    - the battery (10) comprises cooling fluid, the curved wall having two faces, each face being in contact with cooling fluid.

2. The battery (10) according to claim 1, wherein the spacer (16) comprises a plurality of spacer elements (18), each spacer element (18) being formed by a cylindrical tube extending in a third direction (Z) perpendicular to the longitudinal direction (X) and perpendicular to the transverse direction (Y), the spacer elements (18) being arranged side by side in the transverse direction (Y).

3. The battery (10) according to claim 2, wherein the spacer elements (18) are arranged to encounter with each other when compressed.

4. The battery (10) according to claim 2 or 3, wherein at least one of the spacer elements (18) has a diameter that is different from the diameter of at least another of the spacer elements (18).

5. The battery (10) according to any of claims 2 to 4, wherein at least one of the spacer elements (18; 22) has a wall thickness that is different from the wall thickness of at least another of the spacer elements (18).

6. The battery (10) according to claim 1, wherein the spacer (16) comprises only one spacer element (22), formed by a corrugated sheet.

7. The battery (10) according to claim 6, wherein the spacer element (22) is arranged to encounter with lateral walls of the casing (12) when compressed.

8. The battery (10) according to claim 6 or 7, wherein the spacer element (22) comprises a plurality of waves (24), at least one of the waves (24) having a height and/or a wall thickness that is different from the height and/or the wall thickness of at least another of the waves (24).

## FIG.1

FIG.2

## FIG.3

## FIG.4

FIG.5

FIG.6

Europäisches Patentamt
European Patent Office
Office européen des brevets

# EUROPEAN SEARCH REPORT

Application Number

EP 23 30 6640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 193 385 A1 (TOYOTA MOTOR CO LTD [JP]) 19 July 2017 (2017-07-19) * paragraphs [0027], [0044]; figures 2, 3A, 3B * | 1,6-8 | INV. H01M10/647 H01M10/6557 H01M50/233 H01M50/291 |
| X | US 2016/164061 A1 (HAN MIN-YEOL [KR] ET AL) 9 June 2016 (2016-06-09) * paragraph [0044] - paragraph [0069]; figure 3 * | 1 | |
| X | EP 1 117 138 A1 (MATSUSHITA ELECTRIC IND CO LTD [JP]) 18 July 2001 (2001-07-18) * paragraphs [0014] - [0020]; figures 2, 3A, 3B * | 1,6-8 | |
| X | EP 0 817 287 A1 (MATSUSHITA ELECTRIC IND CO LTD [JP]) 7 January 1998 (1998-01-07) * figure 6 * * page 5, line 30 - line 40 * * page 6, line 31 - line 38 * * page 10, line 29 - line 36 * * page 9, line 41 - line 42 * | 1-5 | |
| A | DE 20 2016 100629 U1 (FORD GLOBAL TECH LLC [US]) 18 February 2016 (2016-02-18) * figures * | 1-5 | TECHNICAL FIELDS SEARCHED (IPC) H01M |
| A | US 3 866 786 A (VAN WEELDEREN ADRIAN B) 18 February 1975 (1975-02-18) * figures * | 1-5 | |

The present search report has been drawn up for all claims

| Place of search | Date of completion of the search | Examiner |
|---|---|---|
| Munich | 22 February 2024 | Ulivieri, Enrico |

EPO FORM 1503 03.82 (P04C01)

## ANNEX TO THE EUROPEAN SEARCH REPORT
## ON EUROPEAN PATENT APPLICATION NO.

EP 23 30 6640

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2024

| Patent document cited in search report | | Publication date | Patent family member(s) | | Publication date |
|---|---|---|---|---|---|
| EP 3193385 | A1 | 19-07-2017 | BR | 102016030608 A2 | 22-08-2017 |
| | | | CN | 106960924 A | 18-07-2017 |
| | | | EP | 3193385 A1 | 19-07-2017 |
| | | | JP | 6319332 B2 | 09-05-2018 |
| | | | JP | 2017126430 A | 20-07-2017 |
| | | | KR | 20170084689 A | 20-07-2017 |
| | | | RU | 2648243 C1 | 23-03-2018 |
| | | | US | 2017200934 A1 | 13-07-2017 |
| US 2016164061 | A1 | 09-06-2016 | KR | 20160069807 A | 17-06-2016 |
| | | | US | 2016164061 A1 | 09-06-2016 |
| EP 1117138 | A1 | 18-07-2001 | EP | 1117138 A1 | 18-07-2001 |
| | | | JP | 2001196103 A | 19-07-2001 |
| | | | US | 2001007728 A1 | 12-07-2001 |
| EP 0817287 | A1 | 07-01-1998 | CN | 1178034 A | 01-04-1998 |
| | | | EP | 0817287 A1 | 07-01-1998 |
| | | | JP | 3598627 B2 | 08-12-2004 |
| | | | JP | H09199094 A | 31-07-1997 |
| | | | US | 6033800 A | 07-03-2000 |
| | | | WO | 9726682 A1 | 24-07-1997 |
| DE 202016100629 | U1 | 18-02-2016 | NONE | | |
| US 3866786 | A | 18-02-1975 | CA | 999686 A | 09-11-1976 |
| | | | DE | 2347695 A1 | 04-04-1974 |
| | | | FR | 2200947 A5 | 19-04-1974 |
| | | | GB | 1430661 A | 31-03-1976 |
| | | | JP | S4970003 A | 06-07-1974 |
| | | | US | 3866786 A | 18-02-1975 |

EPO FORM P0459

For more details about this annex : see Official Journal of the European Patent Office, No. 12/82